# DEMANDE DE BREVET EUROPEEN

(11) **EP 1 978 243 A2**
(43) Date de publication de la demande: **08.10.2008**
(21) Numéro de dépôt: 08153892.8
(22) Date de dépôt: 01.04.2008
(51) Int. Cl.: F02P 19/02, F01N 3/025

(54) **Boîtier de commande de puissance pour composants de moteur de véhicule automobile**

(30) Priorité: 06.04.2007 FR 0754377
(71) Demandeur: PEUGEOT CITROËN AUTOMOBILES S.A., 78140 Vélizy Villacoublay (FR)
(72) Inventeur: Bouchet, Cyril, 77174, Villeneuve le Comte (FR)
(74) Mandataire: Ménès, Catherine

(57) **Abrégé**

Boîtier 15 de commande de puissance pour composants de moteur 4 de véhicule automobile, ledit moteur comportant des bougies de préchauffage 6 du carburant injecté, un calculateur 14 de commande de ses composants et une ligne d'échappement des gaz munie d'un catalyseur 10 associé à un filtre à particules 11 et d'un système 12 d'injection de carburant composé d'une pompe 1 reliée à une bougie de chauffage 2 du carburant suivie d'un dispositif de vaporisation 3 dont la sortie 13 débouche dans le conduit d'échappement 9, en amont du catalyseur 10.

Selon l'invention, le boîtier est connecté au calculateur moteur 14 et il comporte des moyens de commande de l'activation des bougies de préchauffage 6 du moteur et de la bougie de chauffage 2 du système 12 de vaporisation de carburant.

L'invention permet de n'utiliser qu'un seul interface de puissance pour les deux sortes de bougies, ce qui diminue les besoins en dissipation thermique et permet un gain économique et un gain de place sous le capot moteur.

## Description

L'invention concerne les dispositifs de commande des organes électriques d'un moteur de véhicule automobile et de son système de dépollution.

Les polluants issus de la combustion d'un moteur de véhicule automobile, que celui-ci soit un moteur Diesel ou essence, sont majoritairement des hydrocarbures imbrûlés, des oxydes d'azote (monoxyde d'azote NO et dioxyde d'azote NO₂), des oxydes de carbone (monoxyde de carbone CO) et dans le cas des moteurs Diesel et des moteurs à injection directe à essence, des particules solides carbonées.

Afin de respecter les normes environnementales internationales, la maîtrise des émissions de HC, de CO, de NOx et de particules est impérative et des technologies de post-traitement des gaz sont indispensables.

La dépollution des véhicules automobiles fait appel à différents systèmes de post-traitement pour éliminer les polluants produits par le moteur, tels les catalyseurs et le filtre à particules dans le cas des moteurs Diesel.

Le filtre à particules permet d'éliminer par filtration les particules solides présentes dans les gaz d'échappement des moteurs Diesel. Une fois piégées au sein du filtre, les particules doivent être éliminées périodiquement par élévation de la température jusqu'à 450 à 700°C au sein du filtre afin d'entraîner leur combustion. Cette opération est couramment appelée « régénération » du filtre à particules. Classiquement l'énergie nécessaire à la régénération est fournie par une élévation de la température des gaz d'échappement.

Cependant demander au moteur de fournir une telle température présente des difficultés, en particulier dans le cas des températures les plus élevées comprises entre 550 à 700°C.

Généralement le surplus d'énergie à l'échappement par rapport au fonctionnement normal du moteur est fourni par l'utilisation de post-injections, c'est-à-dire d'injections de carburant tardives, après le point mort haut du cycle, ou par une dégradation du rendement de la combustion.

Dans le cas de l'utilisation d'une post-injection celle-ci peut brûler totalement ou partiellement dans le moteur, générant une élévation de la température des gaz d'échappement ou, si elle est suffisamment tardive, entraîner une augmentation des quantités de CO et d'HC à l'échappement qui s'oxydent en arrivant sur le catalyseur d'oxydation afin de générer de la chaleur.

Cette méthode entraîne une contrainte thermique forte sur le catalyseur le plus proche du moteur qui est soumis à chaque régénération à une forte élévation de température. Par ailleurs le turbocompresseur et le collecteur d'échappement sont aussi soumis à des températures élevées. Enfin les méthodes de chauffage issues du moteur entraînent de la dilution de gazole dans l'huile de lubrification de celui-ci, ce qui est préjudiciable à sa durée de vie.

L'utilisation d'injection de gazole à l'échappement permet de résoudre la plupart de ces problèmes. Dans ce cas le chauffage issu du moteur est fortement réduit et la chaleur est générée par combustion du gazole introduit à l'échappement sur le catalyseur en amont du filtre à particules. La dilution d'huile alors est fortement réduite ainsi que les contraintes thermiques sur le collecteur d'échappement et le turbocompresseur.

Le gazole est introduit sous forme vapeur, directement dans la ligne d'échappement, en amont du catalyseur et du filtre à particules. L'oxydation des hydrocarbures ainsi envoyés sur le catalyseur provoque un dégagement de chaleur important dans celui-ci et augmente, en conséquence la température des gaz à l'entrée du filtre à particules.

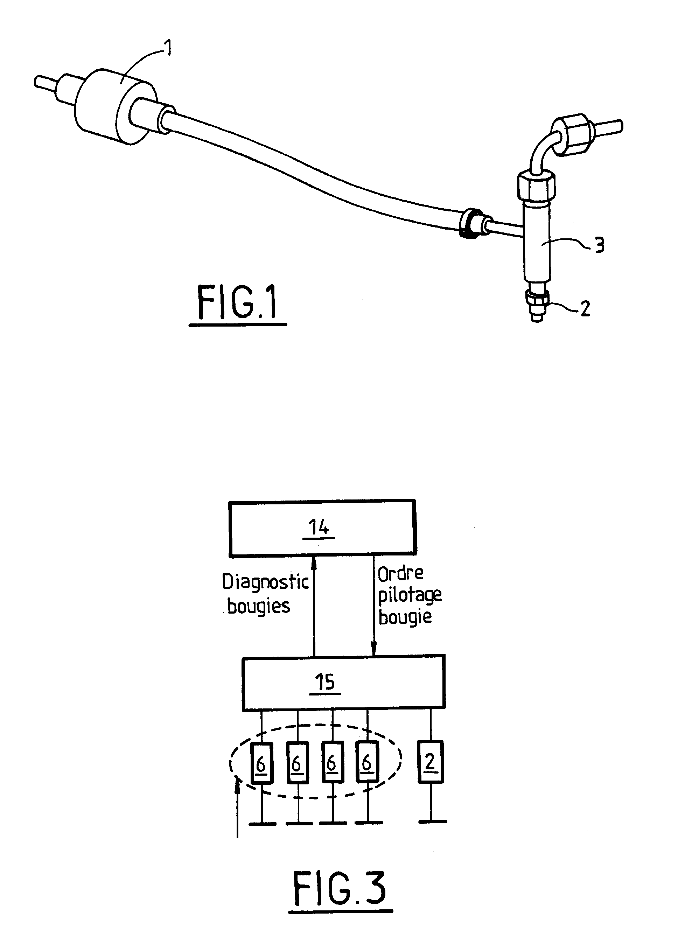

La figure 1 propose un schéma de fonctionnement de ce système. Il se compose d'une pompe 1 reliée à une bougie de chauffage 2 suivie d'un dispositif de vaporisation 3 dont la sortie débouche dans le conduit d'échappement, en amont du catalyseur associé au filtre à particules.

La pompe 1 envoi le carburant, qu'elle a prélevé dans le réservoir du véhicule, dans le système de vaporisation 3. En passant à proximité de la bougie 2, ce carburant subit une élévation de température suffisante pour le faire passer en phase vapeur. C'est sous cette forme qu'il est introduit, par le système de vaporisation, dans le conduit d'échappement.

Pour parvenir à ce résultat, la bougie utilisée doit être de forte puissance, sa consommation électrique peut dépasser les 20A. Son pilotage nécessite donc une interface de puissance associée au calculateur moteur.

Or, du fait de la complexité et du nombre des systèmes électriques et électroniques présents dans le moteur et dans les composants périphériques (notamment destinés à la dépollution), la capacité de dissipation thermique du calculateur moteur est déjà à son maximum. En outre le style des véhicules actuels a considérablement réduit la place sous le capot, de sorte que le volume disponible est de plus en plus limité.

Pour toutes ces raisons, l'implantation d'un nouveau boîtier comportant une interface de puissance est particulièrement difficile à mettre en oeuvre.

Le but de l'invention est donc de proposer un nouvel agencement des systèmes d'interface de puissance du calculateur moteur permettant d'intégrer le pilotage de la bougie du dispositif de vaporisation de carburant.

A cet effet, la présente invention a pour objet un boîtier de commande de puissance pour composants de moteur de véhicule automobile, ledit moteur comportant des bougies de préchauffage du carburant injecté, un calculateur de commande de ses composants et une ligne d'échappement des gaz munie d'un catalyseur associé à un filtre à particules et d'un système d'injection de carburant composé d'une pompe reliée à une bougie de chauffage du carburant suivie d'un dispositif de vaporisation dont la sortie débouche dans le conduit d'échappement, en amont du catalyseur.

Selon l'invention ce boîtier de commande de puissance est connecté au calculateur moteur et il comporte des moyens de commande de l'activation des bougies de préchauffage du moteur et de la bougie de chauffage du système de vaporisation de carburant.

Selon d'autres caractéristiques avantageuses de l'invention :
■ Le boîtier comporte des moyens de diagnostic aptes à déterminer l'état de fonctionnement des bougies pilotées et à délivrer un signal en direction du calculateur en cas de dysfonctionnement d'au moins l'une d'entre elles.
■ Les moyens de commande du boîtier assurent :
   - le pilotage des bougies selon des stratégies dépendant des phases de fonctionnement du moteur.
   - le pilotage des bougies selon des stratégies aptes à palier l'effet d'événements pouvant affecter le fonctionnement du moteur ou celui des dispositifs associés.
   - L'activation des bougies de préchauffage au démarrage du moteur.
   - L'activation de la bougie de chauffage du système de vaporisation de carburant lors des phases de régénération du filtre à particules.
   - L'activation des bougies de préchauffage l'une après l'autre lorsque la charge de la batterie du véhicule est reconnue faible par le système de surveillance.
   - L'activation des bougies de préchauffage en même temps que celle de la bougie du système de vaporisation lorsque le filtre à particules nécessite une phase de régénération alors que le moteur du véhicule fonctionne à trop faible charge pour que les gaz d'échappement atteignent la température nécessaire à la combustion des particules.

D'autres caractéristiques et avantages de l'invention apparaîtront clairement à la lecture de la description ci-après, donnée à titre indicatif en référence aux dessins annexés dans lesquels :
- La figure 1 est un schéma d'un système d injection de carburant en phase vapeur,
- La figure 2 est un schéma montrant un moteur et sa ligne d'échappement équipé de l'invention,
- La figure 3 est un schéma du circuit de commande des bougies selon l'invention.

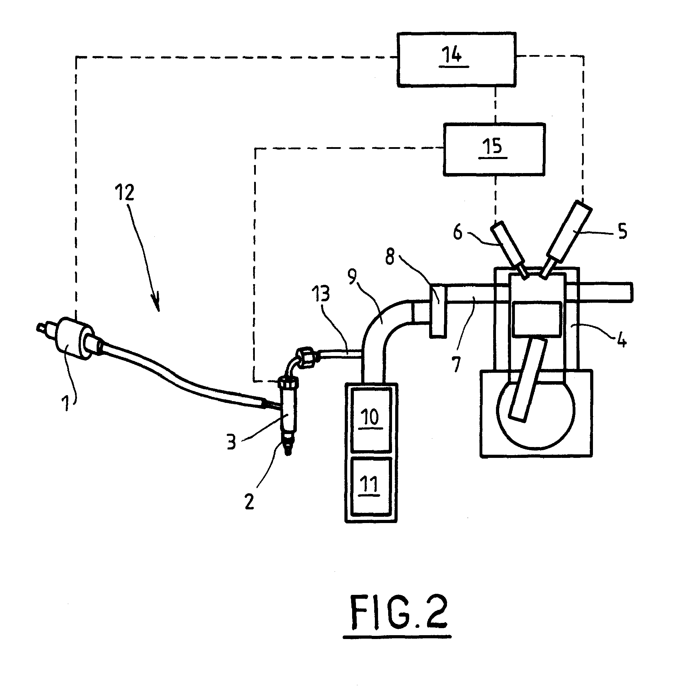

Sur la figure 2, on a représenté un moteur 4, par exemple un moteur Diesel, muni d'injecteurs 5 et de bougies de préchauffage 6.

En sortie du moteur 4 se trouve un collecteur des gaz d'échappement 7 et un turbocompresseur 8, débouchant dans le conduit d'échappement 9 dans lequel sont placés un catalyseur 10 associé à un filtre à particules 11.

En sortie du turbocompresseur 8, un système 12 permet l'introduction de carburant comme par exemple du gazole, dans la ligne d'échappement.

Ce système se compose, comme on l'a dit plus haut, d'une pompe 1 reliée à une bougie de préchauffage 2 suivie d'un dispositif de vaporisation 3 dont la sortie 13 débouche dans le conduit d'échappement 9, en amont du catalyseur 10 associé au filtre à particules 11.

La pompe 1 est alimentée par le circuit relié au réservoir de carburant du véhicule et envoi le carburant qu'elle prélève dans ce réservoir dans le système de vaporisation 3. En passant à proximité de la bougie 2, ce carburant subit une élévation de température suffisante pour le faire passer en phase vapeur. C'est sous cette forme qu'il est introduit, par le système de vaporisation, dans le conduit 9.

Un calculateur 14 pilote les différents organes du moteur et, notamment, les injecteurs 5 et la pompe 1 du système 12 d'introduction de carburant à l'échappement.

Selon l'invention, le calculateur moteur 14 est également relié à un boîtier 15 intégrant des circuits de commande et de diagnostic. Ces circuits sont aptes à fournir la puissance nécessaire pour commander, à la fois, les bougies de préchauffage 6 du moteur et la bougie 2 de chauffage du système 12 d'introduction de carburant à l'échappement.

Les circuits de diagnostic également intégrés au boîtier 15 déterminent l'état de fonctionnement des bougies pilotées et délivrent un signal en direction du calculateur 14 en cas de dysfonctionnement de l'une ou plusieurs d'entre elles.

La figure 3 présente un schéma de fonctionnement du dispositif selon l'invention dans le cas d'un moteur à quatre cylindres.

Le calculateur moteur envoie au boîtier 15 les signaux de pilotage des bougies de préchauffage 6 et de la bougie 2 du système 12 de vaporisation de carburant.

En retour, le boîtier 15 envoie au calculateur 14, des signaux correspondant à l'état de fonctionnement de ces bougies.

Le boîtier 15 assurera en conséquence le pilotage des bougies selon différentes stratégies, en fonction des phases de fonctionnement du moteur et de certains événements pouvant affecter ce fonctionnement ou celui des dispositifs associés.

Par exemple, en fonctionnement normal, au démarrage du moteur, seules les bougies de préchauffage 6 seront activées alors que la bougie 2 du système 12 de vaporisation de carburant ne sera activée que lors des phases de régénération du filtre à particules.

Lors d'une phase de démarrage, si la charge de la batterie est reconnue faible par le système de surveillance, le boîtier 15 pourra activer les bougies de préchauffage 6 l'une après l'autre en lieu et place de l'activation simultanée habituelle.

De même encore, si le filtre à particules nécessite une phase de régénération alors que le moteur 4 du véhicule fonctionne à trop faible charge pour que les gaz d'échappement atteignent la température nécessaire à la combustion des particules, le boîtier 15 activera, normalement, la bougie 2 du système 12 de vaporisation de carburant mais commandera en même temps la mise en fonctionnement des bougies de préchauffage 6.

Ce déclanchement de consommateurs électriques supplémentaires permet d'augmenter la charge du moteur et donc la température des gaz d'échappement.

Bien entendu, d'autres stratégies pourront être mises en oeuvre sans sortir du champ de l'invention.

Le boîtier de commande et de diagnostic que l'on vient de décrire permet donc de piloter les bougies de préchauffage du moteur ainsi que la bougie du système de vaporisation de carburant sans avoir à intégrer une interface de puissance dans le calculateur moteur. On diminue ainsi les besoins en dissipation thermique de ce dernier.

De même les signaux échangés entre le calculateur moteur et le boîtier sont des signaux de faible courant qui ne provoquent pas d'élévation thermique sensible dans le calculateur.

Le pilotage de plusieurs composants par le même boîtier assure aussi un gain économique et un gain de place sous le capot moteur.

On relèvera encore que le diagnostic sur l'état de fonctionnement des bougies se fait à l'aide d'un conducteur unique reliant le calculateur au boîtier.

## Revendications

1. Boîtier (15) de commande de puissance pour composants de moteur (4) de véhicule automobile, ledit moteur comportant des bougies de préchauffage (6) du carburant injecté, un calculateur (14) de commande de ses composants et une ligne d'échappement des gaz munie d'un catalyseur (10) associé à un filtre à particules (11) et d'un système (12) d'injection de carburant composé d'une pompe (1) reliée à une bougie de chauffage (2) du carburant suivie d'un dispositif de vaporisation (3) dont la sortie (13) débouche dans le conduit d'échappement (9), en amont du catalyseur (10),
**caractérisé en ce qu'**il est connecté au calculateur moteur (14) et **en ce qu'**il comporte des moyens de commande de l'activation des bougies de préchauffage (6) du moteur et de la bougie de chauffage (2) du système (12) de vaporisation de carburant.

2. Boîtier de commande selon la revendication 1,
**caractérisé en ce qu'**il comporte des moyens de diagnostic aptes à déterminer l'état de fonctionnement des bougies (2, 6) pilotées et à délivrer un signal en direction du calculateur (14) en cas de dysfonctionnement d'au moins l'une d'entre elles.

3. Boîtier de commande selon la revendication 1 ou 2,
**caractérisé en ce que** ses moyens de commande assurent le pilotage des bougies (2, 6) selon des stratégies dépendant des phases de fonctionnement du moteur.

4. Boîtier de commande selon la revendication 3,
**caractérisé en ce que** ses moyens de commande assurent le pilotage des bougies (2, 6) selon des stratégies aptes à palier l'effet d'événements pouvant affecter le fonctionnement du moteur ou celui des dispositifs associés.

5. Boîtier de commande selon la revendication 3 ou 4,
**caractérisé en ce que** ses moyens de commande assurent l'activation des bougies de préchauffage (6) au démarrage du moteur.

6. Boîtier de commande selon la revendication 5,
**caractérisé en ce que** ses moyens de commande assurent l'activation de la bougie (2) du système (12) de vaporisation de carburant lors des phases de régénération du filtre à particules (11).

7. Boîtier de commande selon l'une des revendications 4 à 6,
**caractérisé en ce que** ses moyens de commande assurent l'activation des bougies de préchauffage (6) l'une après l'autre lorsque la charge de la batterie du véhicule est reconnue faible par le système de surveillance.

8. Boîtier de commande selon l'une des revendications 4 à 7,
**caractérisé en ce que** ses moyens de commande assurent l'activation des bougies de préchauffage (6) en même temps que celle de la bougie (2) du système (12) de vaporisation lorsque le filtre à particules (11) nécessite une phase de régénération alors que le moteur (4) du véhicule fonctionne à trop faible charge pour que les gaz d'échappement atteignent la température nécessaire à la combustion des particules.
